Europäisches Patentamt

European Patent Office

Office européen des brevets

(11) Veröffentlichungsnummer: **0 090 200**
A2

(19)

(12) # EUROPÄISCHE PATENTANMELDUNG

(21) Anmeldenummer: 83102177.9

(22) Anmeldetag: 05.03.83

(51) Int. Cl.³: **B 32 B 7/04,** B 32 B 25/04

(30) Priorität: 30.03.82 DE 3211631

(43) Veröffentlichungstag der Anmeldung: 05.10.83
Patentblatt 83/40

(84) Benannte Vertragsstaaten: DE FR GB IT

(71) Anmelder: METZELER KAUTSCHUK GMBH,
Gneisenaustrasse 15, D-8000 München 50 (DE)

(72) Erfinder: Härtel, Volker, Dr., Fichtenstrasse 50,
D-8034 Germering (DE)
Erfinder: Blahak, Johannes, Dr., Gautinger Strasse 3,
D-8035 Gauting-Buchendorf (DE)
Erfinder: Urban, Jürgen, Emmeringer Strasse 56,
D-8080 Fürstenfeldbruck (DE)

(74) Vertreter: Michelis, Theodor, Dipl.-Ing.,
Gneisenaustrasse 15, D-8000 München 50 (DE)

(54) **System und Verfahren zum Verbinden von Oberflächen.**

(57) Zur Verbindung von Oberflächen aus Materialien, die
eine extrem starke Ablösungswirkung haben, beispielsweise Silikonkautschuk und Polyurethan-Kunststoffe, wird
zwischen den beiden Oberflächen eine gasdurchlässige,
metallisierte Zwischenlage angeordnet, die durch jeweils
geeignete, affine Klebsotffe mit den Oberflächen verbunden
wird.

METZELER KAUTSCHUK GmbH

München

## System und Verfahren zum Verbinden von Oberflächen

Die Erfindung betrifft ein System und ein Verfahren zum Verbinden von Oberflächen mittels Klebstoffen.

Es sind verschiedene Ausführungsformen von Klebsystemen entwickelt worden, mit denen unterschiedliche Oberflächen miteinander verbunden werden können. Einige Materialien lassen sich jedoch nicht mit ausreichender Festigkeit miteinander verkleben; als Beispiel soll die Verklebung von Silikonkautschuk mit Polyurethan-Kunststoffen genannt werden; Silikonkautschuk wird als Trennmittel für Formen eingesetzt, hat also eine extrem starke Ablösungswirkung, wodurch sich die geringe Haftung zu allen üblichen Materialien, insbesondere Polyurethan-Kunststoffen, ergibt. Ähnliche Probleme bestehen beim Verkleben von EPDM mit Polyurethan und von EPDM mit Naturkautschuk.

Der Erfindung liegt deshalb die Aufgabe zugrunde, ein System und ein Verfahren zum Verbinden von Oberflächen zu schaffen, mit dem auch extrem unverträgliche Oberflächen miteinander verbunden werden können, also Oberflächen von Materialien, die beispielsweise eine starke Ablösungswirkung haben.

Dies wird erfindungsgemäß durch die in den kennzeichnenden Teilen der Ansprüche 1 bzw. 7 angegebenen Merkmale erreicht.

Zweckmäßige Ausführungsformen sind in den Unteransprüchen zusammengestellt.

Die mit der Erfindung erzielten Vorteile beruhen auf der Ausnutzung der an sich bekannten Tatsache, daß praktisch alle üblichen Materialien durch Auswahl eines geeigneten, affinen Klebers auf eine metallische Unterlage geklebt werden können. Deshalb wird eine entsprechende, metallische Zwischenlage zwischen den beiden Oberflächen angeordnet, wobei durch Auswahl eines jeweils geeigneten, affinen Klebstoffes die angestrebte Verbindung mit den beiden Oberflächen erreicht wird.

Alle wesentlichen, im Handel erhältlichen Klebstoffe geben jedoch bei der Aushärtung entweder ein Lösungsmittel oder Essigsäure ab. Damit diese flüssigen Substanzen ausdiffundieren können, wird eine gasdurchlässige, metallisierte Zwischenlage verwendet, die für gasförmige Substanzen, also das verdampfte Lösungsmittel bzw. die verdampfte Essigsäure, frei passierbar ist.

Als gasdurchlässige, metallisierte Zwischenlagen werden poröse, metallisierte Textilmaterialien verwendet. Diese Textilmaterialien werden im allgemeinen aus Fasern hergestellt, die mit einer extrem dünnen Metallschicht überzogen worden sind. Sie kommen in Form von metallisierten Gestricken, Geweben oder Gewirken in den Handel.

Als Metallisierungsmaterial können Nickel, Kupfer, Silber, Gold, Palladium oder Aluminium eingesetzt werden.

Zur Untersuchung dieses neuen Verbindungsprinzips wurden zwei Materialien miteinander verklebt, die eine extrem geringe Haftungsneigung zeigen, nämlich Silikonkautschuk und Polyurethankunststoffe. Silikonkautschuk wird als Trennmatrices für die Entformung von Formkörpern eingesetzt, woraus man bereits erkennen kann, daß dieses Material extrem gute Ablösungseigenschaften und damit eine extrem geringe Haftungsneigung hat.

Dabei wurde auf die Oberfläche eines Körpers aus Silikonkautschuk eine dünne Schicht aus einem Polysiloxan-Kleber aufgebracht, und zwar des von der Firma WACKER vertriebenen Klebers "Elastosil E 43"; auf diese Klebstoff-Schicht wurde ein mit Nickel beschichtetes Polyacrylnitril-Gewebe angedrückt.

Bei der Ausreaktion dieses feuchtigkeitshärtenden Polysiloxan-Klebstoffs verdampft Essigsäure, die durch das Polyacrylnitril-Gewebe nach außen verdunsten kann, während die benötigte Luftfeuchtigkeit durch das Gewebe in die Klebstoffschicht diffundiert.

Nach der Verdampfung der Essigsäure wurde auf die freiliegende Oberseite des metallisierten Polyacrylnitril-Gewebes eine dünne Schicht aus einem rußgefüllten Polychloropren-Primer aufgebracht, und zwar des von der Firma HENKEL vertriebenen "Chemosil 602".

Auf diese Primerschicht wurde dann ein reagierendes Polyurethan-System gegossen. Während der Vernetzung verbindet sich dieses Polyurethan-System mit dem Polychloropren-Primer, so daß ein fester Verbund aus dem Silikon-Kautschuk, dem metallisierten, gasdurchlässigen Gewebe und dem vernetzten Polyurethan entsteht.

Wie durch Versuche festgestellt werden konnte, hatte der so hergestellte Verbundkörper eine Zugfestigkeit von $108 \pm 10 \text{ N} \times \text{cm}^{-2}$.

Auf ähnliche Weise lassen sich auch andere, extrem gering affine Grenzflächen miteinander verbinden, wie beispielsweise EPDM mit Polyurethan oder EPDM mit Naturkautschuk.

Durch Auswahl von metallisierten Geweben mit geeigneter Maschendichte läßt sich die Porengröße der metallisierten, gasdurchlässigen Zwischenlage so auf die Viskosität und die Oberflächenspannung der verwendeten Klebstoffe abstimmen, daß einerseits die Verdunstung der Lösungsmitteldämpfe aus den Klebstoffen und die Eindiffusion von Luftfeuchtigkeit bei Verwendung von feuchtigkeitshärtenden Klebstoffen durch die metallisierte, poröse Zwischenlage nicht behindert werden, andererseits jedoch jeder Kontakt der beiden Klebstoffe miteinander unterbunden wird, also ein Klebstoff nicht von einer Seite auf die Oberfläche der anderen Seite der Zwischenlage gelangen kann.

Dieses Verbindungssystem läßt sich für die Wandhaftung von Festkörpertreibstoffen auf Silikonharz-beschichteten Oberflächen, für die Herstellung von flexiblen Verbundmatten zum Abdecken von Kopiergeräten, für die Verbindung von Kunststoff-Fensterrahmen mit Polyurethan-Dichtungen und auf anderen Gebieten einsetzen, wo zwei extrem ablösungsfreudige Materialien miteinander verbunden werden sollen.

0090200

München, 1.3.1983
MK 242 P 82 EP

METZELER KAUTSCHUK GmbH

München

Patentansprüche

1. System zum Verbinden von Oberflächen mittels Klebstoffen, gekennzeichnet durch eine zwischen den Oberflächen angeordnete, gasdurchlässige, metallisierte Zwischenlage, die durch jeweils geeignete, affine Klebstoffe mit den Oberflächen verbunden ist.

2. System nach Anspruch 1, dadurch gekennzeichnet, daß die Zwischenlage ein metallisiertes Textilmaterial ist.

3. System nach einem der Ansprüche 1 oder 2, dadurch gekennzeichnet, daß die Zwischenlage ein metallisiertes Gestricke, Gewebe oder Gewirke ist.

4. System nach einem der Ansprüche 1 bis 3, dadurch gekennzeichnet, daß die Porengröße der metallisierten, gasdurchlässigen Zwischenlage so auf die Viskosität und die Oberflächenspannung der verwendeten Klebstoffe abgestimmt ist, daß einerseits zwar durch die metallisierte Zwischenlage Lösungsmittel aus den Klebstoffen verdunsten und bei Verwendung von feuchtigkeitshärtenden Klebstoffen Luftfeuchtigkeit eindiffundieren können, andererseits jedoch die metallisierte Zwischenlage für die Klebstoffe undurchlässig ist.

5. System nach mindestens einem der Ansprüche 1 bis 4, dadurch gekennzeichnet, daß als Metall Aluminium, Nickel, Kupfer, Silber oder Gold verwendet wird.

6.    System nach mindestens einem der Ansprüche 1 bis 5
zum Verbinden von Silikonkautschuk mit organischen Elastomeren, insbesondere Polyurethan-Kunststoffen,  dadurch
gekennzeichnet,  daß für die Verbindung der Zwischenlage mit dem Silikonkautschuk ein Polysiloxan-Klebstoff und
für die Verbindung der Zwischenlage mit den organischen
Elastomeren ein Polychloropren- oder Polyurethan-Klebstoff verwendet werden.

7.    Verfahren zum Verbinden von Oberflächen mittels Klebstoffen, insbesondere zur Herstellung eines Systems nach
mindestens einem der Ansprüche 1 bis 6,   dadurch gekennzeichnet,  daß
a) auf eine Oberfläche mittels eines geeigneten, affinen
Klebstoffs eine gasdurchlässige, metallisierte Zwischenlage aufgeklebt wird, und daß
b) auf die metallisierte Zwischenlage mittels eines geeigneten haftenden Klebstoffs die andere Oberfläche aufgeklebt wird.

8.    Verfahren nach Anspruch 7 zum Verbinden von Silikonkautschuk mit organischen Elastomeren,  insbesondere Polyurethan-Kunststoffen,  dadurch gekennzeichnet,  daß auf
den Silikonkautschuk ein Polysiloxan-Klebstoff aufgebracht
wird, daß auf den Polysiloxan-Klebstoff ein mit Nickel beschichtetes, textiles Gewebe, insbesondere ein Polyacrylnitril-Gewebe, aufgelegt wird, daß auf das textile Gewebe
ein rußgefüllter Polychloropren-Klebstoff aufgebracht wird,
und daß auf den rußgefüllten Polychloropren-Klebstoff ein
reagierendes organisches Elastomer-System gegossen und ausgehärtet wird.